Europäisches Patentamt

European Patent Office

Office européen des brevets

(19)

(11) **EP 1 416 415 A1**

(12) # DEMANDE DE BREVET EUROPEEN

(43) Date de publication:
**06.05.2004 Bulletin 2004/19**

(51) Int Cl.⁷: **G06F 17/60**

(21) Numéro de dépôt: **03292695.8**

(22) Date de dépôt: **28.10.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **29.10.2002 FR 0213549**

(71) Demandeur: **Alstom**
**75116 Paris (FR)**

(72) Inventeurs:
- **Delsaut-Furon, Stéphanie**
  **59264 Onnaing (FR)**
- **Dindeleux, Jean-Jacques**
  **59990 Sebourg (FR)**

(74) Mandataire: **Blot, Philippe Robert Emile et al**
**c/o Cabinet Lavoix,**
**2, place d'Estienne d'Orves**
**75441 Paris Cedex 09 (FR)**

(54) **Procédé de conception d'un matériel industriel complexe par définition des caractéristiques structurelles et procédé de fabrication**

(57)     L'invention concerne un procédé de conception d'un matériel industriel spécifié par un cahier des charges exprimant des exigences devant être satisfaites. Il comporte une phase d'analyse du cahier des charges prévoyant l'appréciation, pour chaque exigence exprimée, de chacun des quatre critères suivants : la fiabilité, la disponibilité, la maintenabilité et la sécurité et la formulation de recommandations pour chaque exigence exprimée en fonction de l'appréciation des quatre critères.

Il comporte en outre une phase d'analyse des expériences antérieures comprenant une étape (120) de formulation de recommandations, pour chaque expérience antérieure sélectionnée, en fonction de l'appréciation des quatre critères prédéfinis.

La spécification des caractéristiques structurelles du matériel industriel prévoit la prise en compte des recommandations formulées pour chaque exigence exprimée et pour chaque expérience antérieure sélectionnée.

FIG.2(début)

EP 1 416 415 A1

III Stade de conception détaillée

Conception détaillée — 301

302 — Définition des composants en cause dans le GF

304 — Détermination des fréquences de défaillance

Affectation d'une fréquence de défaillance à chaque composant — 306

Grille de criticité AE,NC,C — 310

Identification si maintenance préventive — 308

Détermination criticité pour chaque unité maintenable — 311

Critique

Non critique

312 — Recommandations

314 — Définition du plan d'action

Définition du plan de maintenance — 316

30

315

# FIG.2(fin)

**Description**

La présente invention concerne un procédé de conception d'un matériel industriel spécifié par un cahier des charges exprimant des exigences devant être satisfaites par le matériel industriel comportant une phase d'analyse du cahier des charges et une phase de spécification des caractéristiques structurelles du matériel.

De nos jours, les industriels sont amenés à fabriquer des matériels industriels complexes à la demande d'un client qui a formulé ses souhaits dans un cahier des charges. Ce cahier des charges définit les performances devant être atteintes par le matériel industriel à fabriquer.

L'analysé du cahier des charges par le fabricant permet de définir chacune des caractéristiques structurelles du matériel industriel.

Dans certains domaines comme le domaine ferroviaire, et notamment en ce qui concerne le matériel roulant utilisé par les sociétés de transport, les coûts de possession d'un matériel sont très élevés par rapport au prix d'acquisition initial du matériel. Ces coûts de possession incluent notamment les coûts d'exploitation, de maintenance, d'indisponibilité totale ou partielle et de modification des matériels.

En particulier, pour un véhicule ferroviaire dont la durée de vie est d'une trentaine d'années, le coût consacré à la maintenance du véhicule ferroviaire et les pertes dues à d'éventuels dysfonctionnements de ce matériel au cours de sa longue durée de vie sont très supérieurs au coût d'acquisition et donc de fabrication du matériel.

Ainsi, les fabricants de matériels cherchent de nos jours à prendre en compte, dès la conception des matériels, les coûts ultérieurs induits par l'utilisation de ce matériel, notamment les coûts de maintenance et les coûts dus à l'indisponibilité du matériel. Cette prise en compte peut se traduire par une augmentation du prix d'acquisition du matériel, ce surcoût étant compensé, lors de l'exploitation du matériel, par des coûts d'exploitation inférieurs.

Toutefois, la prise en compte, dès la définition des caractéristiques structurelles du matériel, des coûts ultérieurs d'exploitation est très délicate.

Certaines méthodes ont été développées afin d'évaluer les coûts d'exploitation d'un matériel pour éventuellement modifier la conception du matériel au cas où sa conception conduirait à un coût d'exploitation trop élevé.

Ces méthodes, et notamment la méthode RCM pour Reliability Centered Maintenance, en anglais, ou Maintenance Basée sur la Fiabilité (MBF) en français, sont fondées sur une analyse des organes élémentaires constituant le matériel après que celui-ci a été conçu.

La mise en oeuvre de ces méthodes conduit à des reconceptions fréquentes de certaines parties du matériel déjà totalement spécifiées et crée des coûts de reconception très élevés.

L'invention a pour but de proposer un procédé de définition des caractéristiques structurelles d'un matériel industriel complexe qui permette une prise en compte des coûts d'exploitation ultérieurs du matériel et qui n'augmente pas substantiellement le coût d'acquisition du matériel.

A cet effet, l'invention a pour objet un procédé du type précité, caractérisé en ce que, pour au moins une partie du matériel industriel, la phase d'analyse du cahier des charges comporte :

- une étape d'appréciation, pour chaque exigence exprimée, de chacun des quatre critères prédéfinis suivants : la fiabilité, la disponibilité, la maintenabilité et la sécurité, par lecture du cahier des charges ; et
- une étape de formulation d'au moins une recommandation pour chaque exigence exprimée en fonction de l'appréciation des quatre critères prédéfinis ;

en ce qu'il comporte en outre une phase d'analyse des expériences antérieures, laquelle phase comporte :

- une étape de sélection d'expériences antérieures applicables ;
- une étape d'appréciation, pour chaque expérience antérieure sélectionnée, de chacun des quatre critères prédéfinis suivants : la fiabilité, la disponibilité, la maintenance et la sécurité ; et
- une étape de formulation d'au moins une recommandation, pour chaque expérience antérieure sélectionnée, en fonction de l'appréciation des quatre critères prédéfinis,

et en ce que la phase de spécification des caractéristiques structurelles du matériel industriel comporte une étape de prise en compte des recommandations formulées pour chaque exigence exprimée et pour chaque expérience antérieure sélectionnée.

Suivant des modes particuliers de mise en oeuvre, le procédé comporte l'une ou plusieurs des caractéristiques suivantes :

- lesdites étapes d'appréciation pour chaque exigence exprimée et chaque expérience antérieure sélectionnée, des quatre critères prédéfinis comportent en outre une appréciation du coût associé à chaque exigence exprimée à chaque expérience antérieure sélectionnée, et les étapes de formulation d'au moins une recommandation sont conduites en fonction en outre de l'appréciation du coût ;

- les étapes d'appréciation et de formulation d'au moins une recommandation, pour chaque exigence exprimée par lecture du cahier des charges et chaque expérience antérieure sélectionnée, de chacun des critères prédéfinis s'effectuent par un groupe d'au moins deux personnes travaillant simultanément sur l'appréciation de chacun des critères et échangeant leurs opinions sur chacun des critères ;
- au moins une recommandation formulée pour une exigence exprimée dans le cahier des charges consiste en une modification du cahier des charges ; et
- il comporte en outre une étape de définition d'un plan d'actions pour la mise en oeuvre des recommandations formulées pour exigences et les expériences antérieures sélectionnées.

L'invention a en outre pour objet un procédé de fabrication d'un matériel industriel complexe comportant une étape de conception du matériel industriel de et une étape de production du matériel avec les caractéristiques structurelles définies, caractérisé en ce que l'étape de conception du matériel industriel comporte la mise en oeuvre d'un procédé tel que décrit ci-dessus

L'invention sera mieux comprise à la lecture de la description qui va suivre, donnée uniquement à titre d'exemple et faite en se référant aux dessins, sur lesquels :

- la figure 1 est un organigramme explicitant un procédé de fabrication d'un matériel ;
- la figure 2 est un organigramme explicitant le procédé de définition des caractéristiques structurelles d'un matériel selon l'invention ; et
- la figure 3 est une vue schématique illustrant la décomposition d'un matériel industriel en sous-éléments.

La description est faite également en référence aux tableaux figurant en fin de description, parmi lesquels :

- le tableau 1 est une grille d'évaluation et de choix des fonctions principales du matériel industriel à étudier ;
- le tableau 2 est une grille d'analyse du cahier des charges et des expériences antérieures ;
- le tableau 3 est une grille de définition des groupes fonctionnels à étudier au stade de la conception préliminaire ;
- le tableau 4 est une grille d'évaluation de chaque groupe fonctionnel ;
- le tableau 5 est une grille d'analyse des dysfonctionnements pour chaque groupe fonctionnel ; et
- le tableau 6 est une grille de criticité utilisée au stade de la conception détaillée.

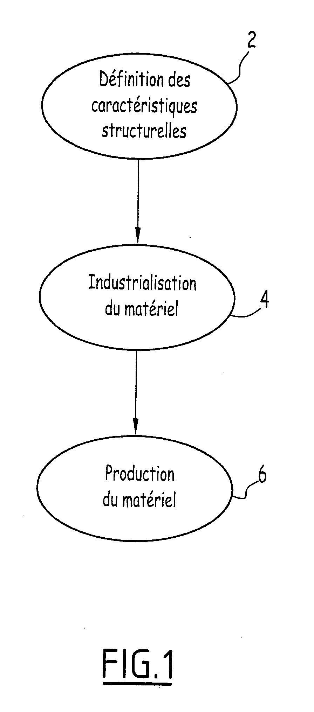

La fabrication d'un matériel industriel complexe à partir d'un cahier des charges fourni par un client peut être décomposé, comme illustré sur la figure 1, en une période 2 de conception du matériel industriel par définition de ses caractéristiques structurelles, suivie d'une période 4 d'industrialisation du matériel industriel en fonction du résultat de la conception et notamment des caractéristiques structurelles définies et enfin une période 6 de production du matériel industriel par mise en oeuvre des méthodes de production définies lors de la période d'industrialisation 4.

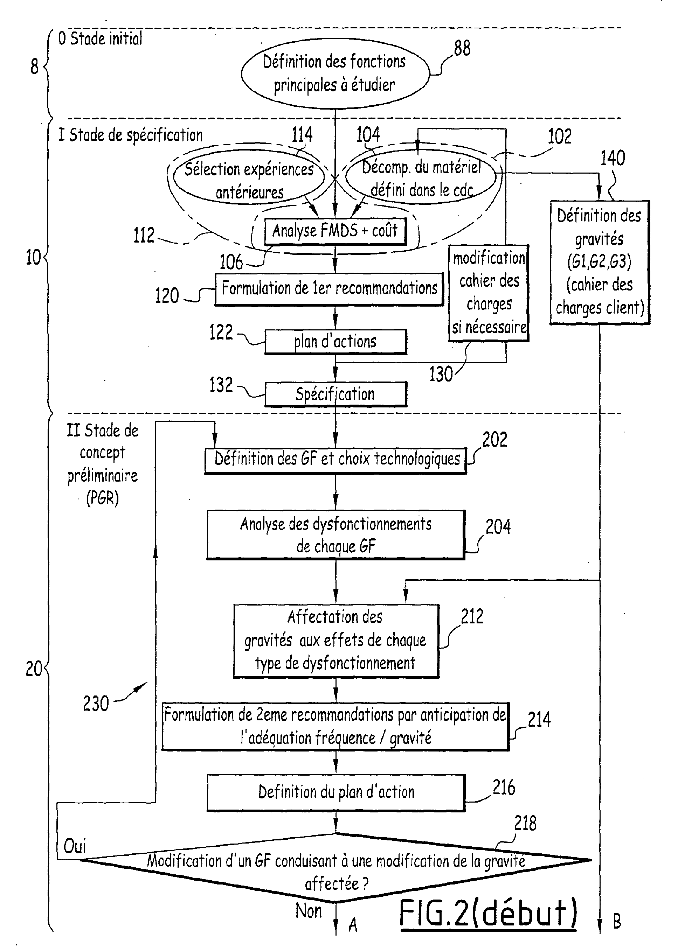

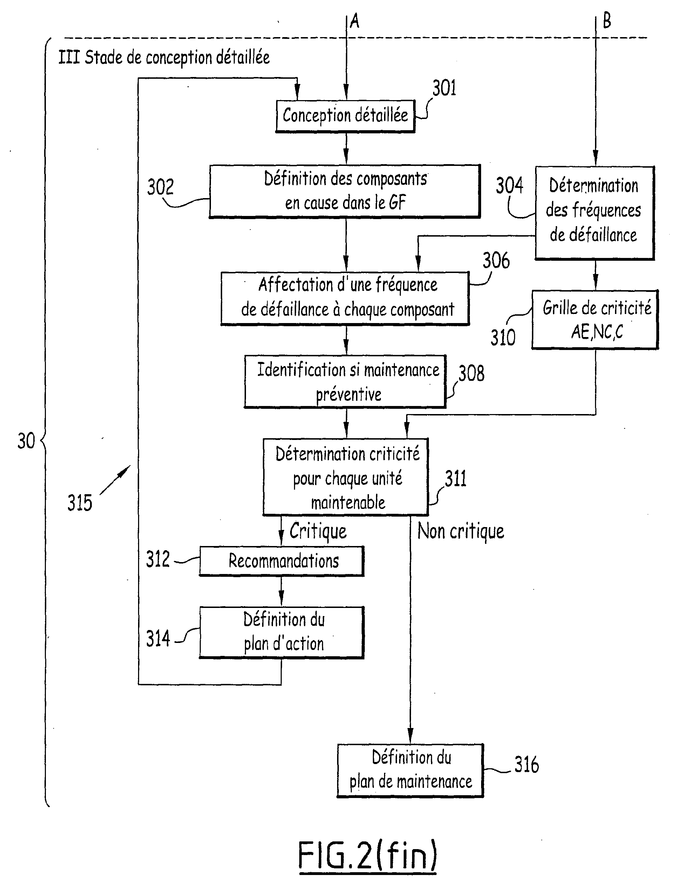

La période 2 de conception peut être décomposée, comme illustré sur la figure 2, en un stade initial 8 de définition des fonctions à étudier, un stade 10 de spécification, un stade 20 de conception préliminaire, un stade 30 de conception détaillée accompagnée de la définition d'un plan de maintenance.

Les caractéristiques structurelles du matériel sont connues à l'issue du stade de conception détaillée 30.

Le stade initial 8 consiste à définir les fonctions principales du matériel industriel qui doivent être étudiées.

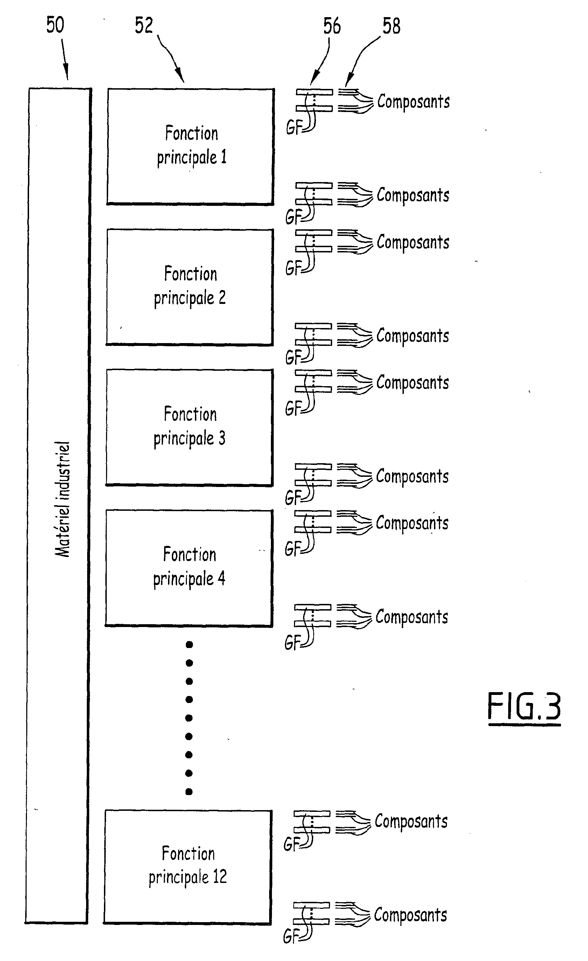

A cet effet, et comme illustré sur la figure 3, le matériel industriel 50 sur lequel porte le cahier des charges est décomposé en plusieurs fonctions principales 52 ou parties.

Pour un matériel roulant de chemin de fer, ces fonctions principales sont par exemple au nombre de douze et sont constituées, par exemple, de la fonction frein, de la fonction portes, de la fonction climatisation, de la fonction traction captation, etc... .

Afin de définir les fonctions principales à étudier, une grille de choix illustrée sur le tableau 1 est utilisée. Chaque fonction principale est précisée dans une ligne d'un tableau. La première colonne 60 du tableau indique, pour chaque fonction principale, si la fonction en cause a ou non un impact sur la sécurité. La colonne suivante 62 permet d'évaluer l'impact de la fonction sur la disponibilité d du matériel alors que la colonne 64 permet d'évaluer l'impact de la fonction sur le coût de possession c du matériel. Pour ce faire, un coefficient de 1 à 3 est affecté à chaque fonction principale pour chaque impact à évaluer.

Plus le coefficient affecté à la fonction est élevé, plus l'impact sur la disponibilité ou le coût de possession est élevé.

Dans la dernière colonne 66 figure une classe allouée à la fonction, c'est-à-dire une valeur C obtenue par application de la formule :

$$C = \sum_{c,d} coefficient \ x \ 10^{coefficient}.$$

Dans le tableau 1, les fonctions principales sont ordonnées par ordre décroissant de classe. Seules les fonctions ayant les classes les plus élevées sont retenues pour l'application du procédé selon l'invention.

Par exemple, seules quatre fonctions principales sur les douze initialement définies sont retenues. Le procédé selon l'invention est mis en oeuvre successivement sur chaque fonction principale ainsi retenue.

La méthode selon l'invention est mise en oeuvre par des groupes de travail chaque groupe étant en charge d'une fonction. Pour chaque fonction principale, la durée consacrée à la mise en oeuvre de la méthode est comprise entre sept et dix jours de travail pour un même groupe. Le même groupe de travail officie pour les stades de spécification 10, de conception préliminaire 20 et de conception détaillée 30.

Le groupé de travail se compose de personnes de l'entité ayant en charge la fabrication du matériel, ainsi que de personnes de la ou chaque entité en charge de fournir les éléments nécessaires à la fabrication du matériel.

Pour l'entité en charge de la fabrication du matériel, le groupe de travail se compose d'un pilote ayant en charge le suivi et l'application de la méthode, d'un responsable des études de conception, d'un responsable de la sûreté de fonctionnement (FDMS) et d'un responsable du service après-vente.

Pour la ou chaque entité en charge de fournir des éléments nécessaires à la fabrication du matériel de chaque fonction, le groupe de travail se compose d'un responsable des études, du responsable de la sûreté de fonctionement (FMDS) et d'une personne en charge de l'après-vente.

Pour chaque fonction principale à étudier, au stade 10 de spécification, une analyse du cahier des charges fourni par le client est d'abord effectuée, à l'étape 102 par le groupe de travail. Cette analyse est effectuée simultanément par tous les membres du groupe de travail. A cet effet, ceux-ci sont réunis dans un même lieu et ils examinent ensemble chaque point du cahier des charges. L'analyse consiste, pour le groupe de travail, à prendre connaissance successivement et systématiquement de chaque ligne du cahier des charges pour déterminer les souhaits du client.

Plus précisément, la fonction principale étudiée du matériel industriel spécifié dans le cahier des charges est décomposée en exigences exprimées par le client.

Ces exigences sont par exemple des fonctions élémentaires à assurer ou des équipements élémentaires à mettre en oeuvre.

Les différentes exigences ainsi définies sont chacune placées dans les lignes successives d'un tableau tel qu'illustré par le tableau 2, dans la colonne exigences/expériences 105 subdivisée en deux colonnes, l'une intitulée "document support" et l'autre "fonction". La colonne "document support" comporte, à chaque ligne la référence d'un document, et plus précisément d'un paragraphe d'un document définissant l'exigence en cause. Sur la même ligne, l'équipement élémentaire concerné est indiqué dans la colonne "fonction".

A l'étape 106, chaque exigence fait l'objet d'une appréciation qualitative de l'impact de cette exigence sur cinq critères prédéfinis. Ceux-ci sont constitués de quatre critères définissant la sûreté de fonctionnement (FMDS) et d'un cinquième critère constitué du coût de la fonction.

Les quatre critères définissant la sûreté de fonctionnement sont la fiabilité, la maintenabilité, la disponibilité et la sécurité (FMDS).

Là fiabilité est définie comme la probabilité pour qu'une entité puisse accomplir une fonction requise dans des conditions données, pendant un intervalle de temps donné.

La maintenabilité, pour une entité donnée, utilisée dans des conditions données d'utilisation, est définie comme la probabilité pour qu'une opération donnée de maintenance active puisse être effectuée pendant un intervalle de temps donné, lorsque la maintenance est assurée dans des conditions données et avec l'utilisation de procédures et moyens prescrits.

La disponibilité est définie comme l'aptitude d'un produit à être en état d'accomplir une fonction requise dans des conditions données, à un instant donné ou pendant un intervalle de temps donné, en supposant que la fourniture des moyens nécessaires est assurée.

La sécurité est définie comme l'absence de risque inacceptable.

Le coût s'entend de l'ensemble des coûts qu'ils soient de conception, de production, d'exploitation ou de maintenance, qu'ils soient induits par un changement de conception, une réparation sur l'ensemble d'un parc, ou d'un changement/ réparation plus fréquent due à une usure prématurée.

Des exemples d'appréciation des cinq critères prédéfinis sont donnés sur le tableau 2 dans les colonnes 107A, 107B, 107C, 107D et 107E.

Par ailleurs, une phase 112 d'analyse d'expériences antérieures est effectuée par le même groupe de travail.

Cette phase d'analyse comprend d'abord, à l'étape 114, une sélection d'expériences antérieures applicables. Cette sélection consiste à retenir, parmi les problèmes rencontrés lors de la fabrication et/ou l'exploitation de matériels analogues, ou fonctionnant dans des conditions analogues, les problèmes rencontrés sur les fonctions principales prédéfinies.

Les différentes expériences antérieures retenues sont listées dans la colonne exigences/expériences 105. Cette expérience est indiquée dans une ligne de la colonne document support en étant identifiée par le document, noté REX, dans lequel figure l'expérience antérieure retenue.

L'étape 106 est à nouveau mise en oeuvre pour l'analyse des expériences antérieures retenues. Chaque expérience antérieure retenue est appréciée de manière qualitative vis-à-vis des cinq critères prédéfinis à savoir la fiabilité, la maintenabilité, la disponibilité, la sécurité et le coût.

Des exemples d'appréciation d'expériences antérieures sont donnés dans le tableau 2.

A l'étape 120, le groupe de travail est amené, à partir de la prise en compte de l'analyse du cahier des charges et de l'analyse des expériences antérieures sélectionnées, à définir des recommandations pour chaque exigence exprimée et chaque expérience retenue.

Ces recommandations consistent, en fait, en des explicitations ou des mises en garde portant sur les exigences du client. Ces explications peuvent prendre la forme d'exigences sous-jacentes à des exigences formulées par le client. Les mises en garde exprimées concernent par exemple des normes à respecter ou des impossibilités techniques détectées en fonction des exigences du client. Les explications ou mises en garde sont indiquées dans une colonne 121 du tableau 2, en regard de chaque exigence et de chaque expérience.

A l'étape 122, un plan d'action pour tenir compte des recommandations effectuées est défini. Ainsi, pour chaque recommandation, une personne en charge de la mise en oeuvre de la recommandation et de son suivi, ainsi qu'un délai de mise en oeuvre sont définis. Le nom de la personne et le délai sont précisés dans des colonnes 123A, 123B du tableau 2, en regard de chaque équipement ou expérience.

Certaines des recommandations 120 peuvent prévoir d'informer le client de l'incohérence de certains souhaits formulés dans le cahier des charges et ainsi préconiser que le cahier des charges soit modifié avec l'accord du client, à l'étape 130.

Cette modification du cahier des charges conduit alors à une remise en oeuvre de l'analyse du cahier des charges, à l'étape 102, et en particulier éventuellement à une nouvelle définition d'exigences et à une nouvelle appréciation des critères prédéfinis pour les nouvelles exigences définies.

De même, les étapes 120 et 122 sont à nouveau mises en oeuvre.

A l'issue de la définition du plan d'action, la spécification proprement dite du matériel est effectuée à l'étape 132, comme connu en soi par définition des caractéristiques structurelles du matériel.

Parallèlement aux étapes 102, 112 d'analyse du cahier des charges et des expériences antérieures, des niveaux de gravité d'un dysfonctionnement notés G1, G2 et GS sont définis, à l'étape 140, à partir du cahier des charges du client. Ces niveaux de gravité sont couramment imposés par le client dans le cahier des charges ou sont définis en accord entre le fabricant et le client. Ils correspondent aux effets plus ou moins pénalisants d'un dysfonctionnement intervenu sur le matériel lors de son exploitation.

Le nombre de niveaux de gravité peut être variable et est compris entre 2 et 5 suivant les exigences du cahier des charges.

Dans le cas d'un matériel roulant utilisé dans le domaine ferroviaire, le niveau de gravité le plus faible G1 correspond, par exemple, aux pannes conduisant à une immobilisation d'une durée inférieure à dix minutes ou à un retrait de l'engin en fin de mission. Le niveau de gravité intermédiaire G2 correspond, par exemple, à une impossibilité d'utiliser le convoi en début de mission ou à une immobilisation d'une durée supérieure à dix minutes. Le niveau de gravité le plus élevé GS correspond, par exemple, à un impact de l'incident sur la sécurité.

Le stade de spécification 10 est suivi du stade de conception préliminaire 20. Le stade de conception préliminaire 20 commence à l'étape 202 par la décomposition de chaque fonction principale en groupes fonctionnels (GF) impliquant le choix d'une technologie. La décomposition d'une fonction principale en groupe fonctionnel 56 est illustrée sur la figure 3.

Un groupe fonctionnel correspond à un matériel ou ensemble de matériels remplissant tout ou partie d'une fonction.

Un exemple de décomposition d'un équipement élémentaire en groupes fonctionnels est donné sur le tableau 3.

La fonction principale à décomposer est identifiée dans une colonne 152. Dans une seconde colonne 154, la fonction principale est décomposée en "sous-fonctions" afin de faciliter la détermination des groupes fonctionnels en cause.

Les groupes fonctionnels (GF) sont enfin identifiés pour chaque sous-fonction dans une colonne 156. A chaque groupe fonctionnel sont en outre associés, respectivement dans une colonne 158 et dans une colonne 160, un acronyme et un numéro de groupe fonctionnel.

Pour chaque groupe fonctionnel, et comme illustré sur le tableau 4, cinq modes de défaillance sont analysés, à l'étape 204. A cet effet, chaque groupe fonctionnel est identifié par son acronyme et son numéro dans une colonne 205 dédiée. Les cinq modes de défaillance sont chacun précisés sur une ligne en regard du groupe fonctionnel considéré dans une colonne 207.

Les modes de défaillance envisagés pour les groupes fonctionnels sont :

- pas de fonction ;
- plus de fonction ;
- fonction dégradée ;
- fonction intempestive ; et
- non arrêt de la fonction.

Dans une colonne 209, il est précisé, pour chaque mode de défaillance, si les effets de la défaillance sont cachés (H) ou évidents (E).

Dans une colonne 211, il est précisé, pour chaque mode de défaillance, les effets induits par la défaillance sur le matériel.

A l'étape 212, un niveau de gravité, parmi les niveaux de gravité définis à l'étape 140, est affecté à chaque mode de défaillance pour le groupe fonctionnel considéré. Ainsi, les niveaux de gravité indiquent les conséquences pour l'exploitation du matériel qui résultent d'un mode de défaillance donné sur le groupe fonctionnel considéré. Les niveaux de gravité sont indiqués dans une colonne 213.

A l'étape 214, des deuxièmes recommandations sont émises pour chaque mode de défaillance et ces recommandations sont indiquées dans une colonne 215 en regard du mode de défaillance considéré correspondant au groupe fonctionnel. Un plan d'action est défini à l'étape 216 et les personnes en charge de la mise en oeuvre et du suivi de ce plan d'action ainsi que le délai d'exécution sont précisés dans les colonnes 217A et 217B, en regard de chaque mode de défaillance.

Le plan d'action peut prévoir une modification d'un groupe fonctionnel. Dans ce cas, et si la modification effectuée conduit à une modification de la gravité affectée au groupe fonctionnel considéré (test effectué à l'étape 218), l'étape 202 et les étapes suivantes sont à nouveau mises en oeuvre pour le groupe fonctionnel modifié. Ainsi, une boucle de retour en arrière 230 est créée dans la succession d'étapes mises en oeuvre au stade de conception préliminaire 20.

L'objectif de la boucle 230 est d'abaisser autant que possible le niveau de gravité affecté à chaque mode de défaillance de chaque groupe fonctionnel.

A l'issue de ce stade de conception préliminaire 20, et après que les niveaux de gravité ont été réduits par l'analyse itérative menée grâce à la boucle 230, le stade de conception détaillée 30 est mis en oeuvre.

Celui-ci commence à l'étape 301 par la conception détaillée proprement dite de chacun des groupes fonctionnels comme connu en soi. Elle se poursuit par la définition, à l'étape 302, pour chaque groupe fonctionnel, des unités maintenables en cause 58 ou composants dans les différents modes de défaillance envisagés pour le groupe fonctionnel considéré.

Les unités maintenables 58 illustrées sur la figure 3 sont des composants ou éléments constitutifs du groupe fonctionnel pouvant être remplacés ou maintenus.

Par exemple, un transformateur est composé entre autres composants, de bobines, d'un circuit de refroidissement, de thermostats... La bobine n'est pas une unité maintenable, alors que le circuit de refroidissement et les thermostats le sont.

Comme illustré sur le tableau 5, les unités maintenables en cause sont indiquées dans une colonne 303 en regard de chaque mode de défaillance préalablement affecté d'un niveau de gravité dans les colonnes 205 à 213.

A l'étape 304, et de manière générale pour toutes les unités maintenables en cause, des fréquences de survenance d'un incident sont définies. Celles-ci sont par exemple exprimées en incidences par an. Dans l'exemple considéré, quatre fréquences F1, F2, F3, F4 sont définies. Celles-ci correspondent à :

- F4 : dix incidents par an ;
- F3 : trois incidents par an ;
- F2 : 0,3 incident par an ; et
- F1 : 0,15 incident par an.

A l'étape 306, une fréquence de défaillance parmi les fréquences F1 à F4 est affectée à chaque unité maintenable en cause définie à l'étape précédente. La fréquence de défaillance est indiquée dans une colonne 307 en regard de chaque unité maintenable en cause. Cette fréquence de défaillance est issue d'un retour d'expérience ou d'un calcul prévisionnel de fiabilité.

A l'étape 308, il est indiqué pour chaque unité maintenable en cause dans une colonne 309 si une maintenance préventive est réalisée pour obtenir le taux de défaillance indiqué en 307. A l'étape 310, et à partir des connaissances du fabricant des besoins du client, ceux-ci étant notamment exprimés dans le cahier des charges, une grille de criticité illustrée sur le tableau 6 est définie. La grille de criticité est définie par des experts. Celle-ci permet d'affecter à chaque couple de paramètres gravité-fréquence de défaillance une appréciation qualitative parmi les niveaux critique (C), non critique (NC) et avis d'expert (AE).

Le niveau critique (C) correspond au cas où l'unité maintenable en cause ne peut être conservée en l'état dans la conception du matériel. Au contraire, le niveau non critique (NC) signifie que l'unité maintenable peut être conservée pour le matériel.

Enfin, le niveau avis d'expert (AE) signifie qu'un expert doit être consulté pour déterminer, en fonction de son seul avis, si l'unité maintenable en cause peut être conservée dans le matériel fabriqué ou doit être remplacée par un autre type d'unité maintenable.

Par application de la grille de criticité, et en fonction des couples niveau de gravité-fréquence de défaillance indiqués pour chaque unité maintenable dans les colonnes 213 et 307 du tableau 5, un niveau de criticité est automatiquement affecté à chaque unité maintenable. Celui-ci est indiqué dans la colonne 311.

Les unités maintenables en cause affectées du niveau à expertiser font l'objet d'une analyse d'un ou plusieurs experts qui décide de réaffecter à cette unité maintenable un niveau critique ou non critique.

Pour les unités maintenables non critiques, un plan de maintenance est défini au stade 40.

En revanche, pour les unités maintenables considérées comme critiques soit directement par application de la grille de criticité, soit suite à l'avis de l'expert, des recommandations sont émises, à l'étape 312, visant à modifier l'unité maintenable en cause, ou ses relations avec les autres unités maintenables du matériel. Ces recommandations sont indiquées dans une colonne 313 en regard de chaque unité maintenable en cause. Un plan d'action est défini à l'étape 314 indiquant, dans une colonne 315A, la personne en charge de l'action et, dans une colonne 315B, le délai d'action.

La mise en oeuvre du plan d'action est vérifiée par le pilote de la méthode. Après exécution du plan d'action, ou lors de la mise en oeuvre de celui-ci et suivant la boucle 315, l'étape de conception détaillée 301 est à nouveau mise en oeuvre pour tenir compte du plan d'action issu des recommandations formulées à l'étape 312. Une nouvelle définition des unités maintenables est effectuée pour certains groupes fonctionnels affectés par le plan d'action à l'étape 302. Les étapes 306 d'affectation d'une fréquence de défaillance et les étapes suivantes sont à nouveau mises en oeuvre. Ainsi, pour chaque unité maintenable, les étapes 306 à 314 sont mises en oeuvre jusqu'à ce que, à l'étape 311, l'unité maintenable ne soit plus considérée comme critique.

Le stade de maintenance 40 définit de manière classique, pour chaque unité maintenable, une vitesse de dégradation, une périodicité de maintenance et un type de tâche.

A l'issue de cette phase de conception et de définition du plan de maintenance, l'industrialisation du matériel est menée à l'étape 4, comme illustré sur la figure 1, puis le produit est fabriqué à l'étape 6.

On constate que, par application rigoureuse du procédé de conception exposé ci-dessus, les défaillances potentielles du matériel sont prises en compte très rapidement dans le cycle de conception du produit. Ainsi, les coûts induits par une reconception ultérieure du produit sont réduits.

## TABLEAU 1

| Fonctions | 60 Impact sur la sécurité | 62 Disponibilité | 64 Coûts | 66 Classe |
|---|---|---|---|---|
| Fonction Traction Captation | Oui | 3 | 2 | 3000+200 |
| Fonction freinage | Oui | 3 | 1 | 3000+10 |
| Fonction Portes | Oui | 2 | 2 | 200+200 |
| Fonction Climatisation | Non | 1 | 1 | 10+10 |

TABLEAU 4

| 205 | 207 | 209 | 211 | 213 | 215 | 217A | 217B |
|---|---|---|---|---|---|---|---|
| Groupe fonctionnel | Mode de défaillance | Evident ou caché | Effet sur le système | Gravité | Recommandations | Personne en action | Date |
| PFM (GF1) | Pas de fonction | E | Destruction des transfos et perte de mission | G2 | Attention, le taux de défaillance doit être inférieur à 0,3 incident par an | M.D | Sem 02 |
| TFI QLM (GF2) | Plus de fonction | H | Echauffement TFP => Risque d'incendie | GS | Attention, le taux de défaillance doit être très inférieur à 0,15 incident par an | M.D | Sem 02 |
| TFI QLM (GF2) | Fonction intempestive | | NA | | | | |

## TABLEAU 6

| | | | | |
|---|---|---|---|---|
| 10 incidents par an | F4 | C | C | C |
| 3 incidents par an | F3 | AE | C | C |
| 0,3 incidents par an | F2 | NC | AE | C |
| 0,15 incidents par an | F1 | NC | NC | C |
| | | G1 | G2 | GS |
| | | Immobilisation < 10 min ou retrait à la fin de la mission | Retrait au début de la mission ou immobilisation > 10 min | Sécurité |

## TABLEAU 2

| Numéro de Codification | Document support | Fonction | Fiabilité | Maintenabilité | Disponibilité | Sécurité | Coûts | Recommandations | Personne en action | Date |
|---|---|---|---|---|---|---|---|---|---|---|
| | Exigences/expériences (105) | Exigences/expériences | 107A | 107B | 107C | 107D | 107E | 121 | 123A | 123B |
| S3 | Specification App6§6.3.2 | Pantographe | 2 panto en redondance => baisse de la fiab intrinseque et hausse de la fiab de mission | - | - | - | - | Vérifier qu'il y a bien une alimentation séparée des deux pantos | F. D | - |
| S4 | Specification App6§6.3.2 | Pantographe | - | - | Pression statique de 60N | Pb de contact | - | Attention au choix des réglages aérodynamiques du panto | F. D | Sem. 40 |
| S5 | Specification App6§6.3.3 | Main circuit breaker (DJ) | - | Envoi d'information au système de diagnostic | - | - | - | Prévoir un contact auxiliaire (fiable) pour compter les ouvertures/fermetures du DJM (assurer le comptage), compteur également intéressant pour la maintenance des contacteurs de lignes (Triom) | M. D | Sem.04 |
| S36 | REX TER2N pg / Z2N5 | Protection des microdj | - | - | Actions intempestives du conducteur par inattention, facteurs humains (accrochage) | - | - | Une modification de la protection des microdj a été réalisée sur pg. Attention à l'implantation et à la protection. | M. D/ L. J | Sem. 04 |

EP 1 416 415 A1

## TABLEAU 3

| 152 | 154 | | | | 156 | 158 | 160 |
|-----|-----|---|---|---|-----|-----|-----|
| **Fonction** | **Sous-fonctions** | | | | **Nom du GF (Organes)** | **Acronymes** | **Numéro** |
| Alimenter en énergie électrique la traction à partir de la caténaire | Alimenter la chaîne de traction (1) | Protéger contre la foudre | | | Parafoudre Monophasé | PFM | GF1 |
| | | Alimenter en monophasé la chaîne de traction | Détecter les surcourants primaires transfo | Abaisser le courant | Transformateur d'intensité commandant le relais QLM | TFI QLM | GF2 |
| | | | | Détecter un surcourant | Relais QLM | QLM | GF3 |
| | | | Dissiper les pertes thermiques | | Groupes motoventilateurs du transformateur principal (2 par transfo) | GMV TFP | GF4 - GF5 |
| | | | Mesurer l'énergie consommée en entrée | | Capteur de courant | CAI | GF6 |
| | | | Transformer du 15kV en 980V | | Transformateur principal | TFP | GF7 |
| | | Protéger la chaîne de traction en monophasé | | | Disjoncteur monophasé | DJM | GF8 |

EP 1 416 415 A1

11

## TABLEAU 5

| 205 | 207 | 209 | 211 | 213 | 303 | 307 | 309 | 311 | 313 | 315A | 315B |
|---|---|---|---|---|---|---|---|---|---|---|---|
| Groupe fonctionnel | Mode de dysfonc-tionnement | Evident ou caché | Effet sur le système | Gravité | Unités maintenables en cause | Fréquence | Maintenance Préventive Oui/Non | Criticité | Recommandations | Personne en action | Date |
| PFM (GF1) | Pas de fonction | E | Destruction des transfos et perte de mission | G2 | Fermeture intempes-tive du contact | F1 | Non | NC | - | | - |
| TFI QLM (GF2) | Plus de fonction | H | Echauffement TFP => Risque d'incendie | GS | Spires en court-circuit (primaire) | F1 | Non | C | Contrôler la qualité fournisseur | P. T | sem. 04 |
| TFI QLM (GF2) | Fonction intempes-tive | | NA | | - | - | - | - | - | | - |

EP 1 416 415 A1

# EP 1 416 415 A1

**Revendications**

1. Procédé de conception d'un matériel industriel spécifié par un cahier des charges exprimant des exigences devant être satisfaites par le matériel industriel comportant une phase (104) d'analyse du cahier des charges et une phase (132) de spécification des caractéristiques structurelles du matériel, **caractérisé en ce que**, pour au moins une partie du matériel industriel, la phase d'analyse du cahier des charges comporte :

   - une étape (106) d'appréciation, pour chaque exigence exprimée, de chacun des quatre critères prédéfinis suivants : la fiabilité, la disponibilité, la maintenabilité et la sécurité, par lecture du cahier des charges ; et
   - une étape (120) de formulation d'au moins une recommandation pour chaque exigence exprimée en fonction de l'appréciation des quatre critères prédéfinis ;

   **en ce qu'**il comporte en outre une phase d'analyse des expériences antérieures, laquelle phase comporte :

   - une étape (114) de sélection d'expériences antérieures applicables ;
   - une étape (106) d'appréciation, pour chaque expérience antérieure sélectionnée, de chacun des quatre critères prédéfinis suivants : la fiabilité, la disponibilité, la maintenance et la sécurité ; et
   - une étape (120) de formulation d'au moins une recommandation, pour chaque expérience antérieure sélectionnée, en fonction de l'appréciation des quatre critères prédéfinis,

   et **en ce que** la phase (132) de spécification des caractéristiques structurelles du matériel industriel comporte une étape de prise en compte des recommandations formulées pour chaque exigence exprimée et pour chaque expérience antérieure sélectionnée.

2. Procédé de conception selon la revendication 1, **caractérisé en ce que** lesdites étapes d'appréciation (106) pour chaque exigence exprimée et chaque expérience antérieure sélectionnée, des quatre critères prédéfinis comportent en outre une appréciation du coût associé à chaque exigence exprimée à chaque expérience antérieure sélectionnée, et **en ce que** les étapes (120) de formulation d'au moins une recommandation sont conduites en fonction en outre de l'appréciation du coût.

3. Procédé selon la revendication 1 ou 2, **caractérisé en ce que** les étapes d'appréciation (106) et de formulation (120) d'au moins une recommandation, pour chaque exigence exprimée par lecture du cahier des charges et chaque expérience antérieure sélectionnée, de chacun des critères prédéfinis s'effectuent par un groupe d'au moins deux personnes travaillant simultanément sur l'appréciation de chacun des critères et échangeant leurs opinions sur chacun des critères.

4. Procédé selon une quelconque des revendications précédentes, **caractérisé en ce qu'**au moins une recommandation formulée pour une exigence exprimée dans le cahier des charges consiste en une modification (130) du cahier des charges.

5. Procédé selon l'une quelconque des revendications précédentes, **caractérisé en ce qu'**il comporte en outre une étape (122) de définition d'un plan d'actions pour la mise en oeuvre des recommandations formulées pour exigences et les expériences antérieures sélectionnées.

6. Procédé de fabrication d'un matériel industriel complexe comportant une étape (2) de conception du matériel industriel de et une étape (6) de production du matériel avec les caractéristiques structurelles définies, **caractérisé en ce que** l'étape (2) de conception du matériel industriel comporte la mise en oeuvre d'un procédé selon l'une quelconque des revendications précédentes.

Définition des
caractéristiques
structurelles

2

Industrialisation
du matériel

4

Production
du matériel

6

## FIG.1

**0 Stade initial**

Définition des fonctions principales à étudier — 88

8

**I Stade de spécification**

Sélection expériences antérieures — 114

Décomp. du matériel défini dans le cdc — 104 / 102

Définition des gravités (G1,G2,G3) (cahier des charges client) — 140

Analyse FMDS + coût — 112 / 106

10

Formulation de 1er recommandations — 120

plan d'actions — 122

modification cahier des charges si nécessaire — 130

Spécification — 132

**II Stade de concept préliminaire (PGR)**

Définition des GF et choix technologiques — 202

Analyse des dysfonctionnements de chaque GF — 204

Affectation des gravités aux effets de chaque type de dysfonctionnement — 212

20

Formulation de 2eme recommandations par anticipation de l'adéquation fréquence / gravité — 214

230

Définition du plan d'action — 216

Oui

Modification d'un GF conduisant à une modification de la gravité affectée ? — 218

Non ↓ A

## FIG.2(début) ↓ B

III Stade de conception détaillée

A

B

Conception détaillée — 301

Définition des composants
en cause dans le GF — 302

Détermination
des fréquences
de défaillance — 304

Affectation d'une fréquence
de défaillance à chaque composant — 306

Grille de criticité
AE,NC,C — 310

Identification si maintenance
préventive — 308

Détermination criticité
pour chaque unité
maintenable — 311

Critique

Non critique

Recommandations — 312

Définition du
plan d'action — 314

30

315

Définition du
plan de maintenance — 316

## FIG.2(fin)

FIG.3

**Office européen
des brevets**

**DECLARATION**

qui selon la règle 45 de la Convention sur le brevet
européen est considerée, aux fins de la procédure ultérieure,
comme le rapport de la recherche européenne

Numéro de la demande

EP 03 29 2695

| | CLASSEMENT DE LA DEMANDE (Int.Cl.7) |
|---|---|
| La division de la recherche estime que la présente demande de brevet n'est pas conforme aux dispositions de la CBE au point qu'une recherche significative sur l'état de la technique *ne peut être effectuée au regard de toutes les revendications*<br><br>Raison :<br><br><br><br>Les revendications concernent un object exclu de la brevetabilité selon l' Art. 52(2) et (3) CBE. Etant donné que les revendications sont formulées de façon à revendiquer de tels objets ou leur réalisation technologique à l'aide de caractéristiques triviales, l'examinateur de recherche n'a pas pu définir de problème technique dont la solution pourrait éventuellement impliquer une activité inventive. Par conséquent il n'était pas possible d'effectuer une recherche significative sur l'état de la technique (Règle 45 CBE et Directives du CBE, Chapitre VIII, 1-6).<br><br>L'attention du déposant est attirée sur le fait que, suite à une déclaration conformément à la Règle 45 CBE, une recherche pourrait être effectuée pendant la phase d'examen, à condition que les problèmes ayant conduit à cette déclaration de non-recherche ou de recherche incomplète aient été résolus (voir Directives OEB C-VI, 8.5).<br><br>---<br>----- | G06F17/60 |
| *Lieu de la recherche*<br>LA HAYE | *Date*<br>12 décembre 2003 | *Examinateur*<br>Nicoli, F |

EPO FORM 1504 (P04C38)